# FASCICULE DE BREVET EUROPEEN

(11) **EP 2 082 949 B1**
(45) Date de publication et mention de la délivrance du brevet: **28.07.2010**
(21) Numéro de dépôt: 09150406.8
(22) Date de dépôt: 12.01.2009
(51) Int. Cl.: B62D 65/06, B60R 16/02, B62D 65/02

(54) **Panneau de guidage de faisceau de câbles dans un volume de carrosserie d'un véhicule automobile**
Führungsplatte für Kabelstränge in einem Karosserieteil eines Kraftfahrzeugs
Panel for guiding a wiring harness in a volume of an automobile body

(30) Priorité: 22.01.2008 FR 0850400
(43) Date de publication de la demande: 29.07.2009
(73) Titulaire: Peugeot Citroën Automobiles SA, 78140 Vélizy-Villacoublay (FR)
(72) Inventeur: Adam, Amode, 92160 Antony (FR)
(74) Mandataire: Allain, Laurent

(56) Documents cités:
- WO-A-2006/109246
- FR-A- 2 893 457
- JP-A- 2007 196 970

## Description

L'invention concerne un panneau, destiné à former avec un panneau de carrosserie un ensemble délimitant un volume opaque et apte à être traversé par un faisceau de câbles depuis une entrée jusqu'à une sortie prévues dans cet ensemble, par exemple le panneau d'un ouvrant d'un véhicule.

Généralement, pour qu'un faisceau de câbles traverse un tel ensemble de carrosserie, un opérateur insère l'une des extrémités du faisceau de câbles dans l'entrée de l'ensemble puis fait pénétrer progressivement le reste du faisceau de câbles et récupère ce faisceau de câbles au niveau de la sortie de l'ensemble.

Cependant, comme le volume délimité par l'ensemble de carrosserie est opaque, l'opérateur ne peut pas y visualiser la position du faisceau de câbles et se trouve en difficulté pour récupérer le faisceau de câbles à la sortie. Il est alors obligé de se munir d'un outil supplémentaire pour s'aider à saisir le faisceau. Cette manipulation se révèle être délicate et longue, et nuit en conséquence à la rapidité du montage d'un véhicule.

Le but de l'invention est de remédier aux inconvénients décrits ci-dessus.

A cet effet, l'invention concerne un panneau de guidage comprenant un système de guidage sur au moins une partie de la trajectoire du faisceau de câbles entre l'entrée et la sortie de l'ensemble.

Avantageusement, l'entrée du faisceau de câbles dans l'ensemble et la sortie du faisceau de câbles depuis l'ensemble sont respectivement positionnées de sorte que lorsque le faisceau de câbles est en place dans l'ensemble, il adopte une forme courbée et le système de guidage dudit panneau de guidage est arqué d'une courbure orientée vers la sortie de l'ensemble.

De préférence, le système de guidage est une partie faisant saillie du panneau de guidage et dirigée vers le panneau de carrosserie de l'ensemble.

L'invention concerne également un procédé de fabrication d'un panneau de guidage tel que défini ci-dessus et qui est caractérisé en ce qu'il comprend au moins les étapes d'emboutissage du système de guidage et de solidarisation par soudure du système de guidage au panneau de guidage.

L'invention concerne également un ensemble de carrosserie caractérisé en ce qu'il comprend un panneau de guidage tel que défini ci-dessus, et un panneau de carrosserie espacé du panneau de guidage en délimitant un volume opaque, l'ensemble étant apte à être traversé par un faisceau de câbles depuis une entrée du faisceau de câbles dans cet ensemble jusqu'à une sortie du faisceau de câbles de cet ensemble.

De préférence, l'entrée de l'ensemble est l'espace entre les panneaux de guidage et de carrosserie au niveau du bord périphérique d'au moins l'un de ces panneaux et la sortie de l'ensemble est un orifice formé dans l'un de ces panneaux.

Avantageusement, le panneau de guidage est la doublure du panneau de carrosserie formant ouvrant du véhicule.

L'invention concerne également un véhicule automobile caractérisé en ce qu'il est équipé d'un ensemble de carrosserie tel que défini ci-dessus.

L'invention concerne également une utilisation d'un ensemble de carrosserie tel que défini ci-dessus pour le guidage d'un faisceau de câbles, et caractérisé en ce qu'il comprend au moins les étapes suivantes :
- on insère le faisceau de câbles dans l'entrée de l'ensemble de carrosserie de véhicule qui glisse le long du système de guidage, et
- on récupère le faisceau de câbles par la sortie de l'ensemble.

D'autres caractéristiques et avantages de la présente invention apparaîtront dans la description explicative qui va suivre faite en référence aux dessins annexés donnés uniquement à titre d'exemple et dans lesquels :
- la figure 1 est une vue partielle extérieure d'un hayon de véhicule qui comprend un panneau de guidage et un panneau de carrosserie formant ensemble de carrosserie et conformes à l'invention ;
- la figure 2 est une vue agrandie de la partie cerclée en II de la figure 1 ;
- la figure 3 est une vue de l'intérieur du hayon de véhicule de la figure 1 ; et
- la figure 4 est une vue du hayon de véhicule de la figure 1 représentée sans panneau externe.

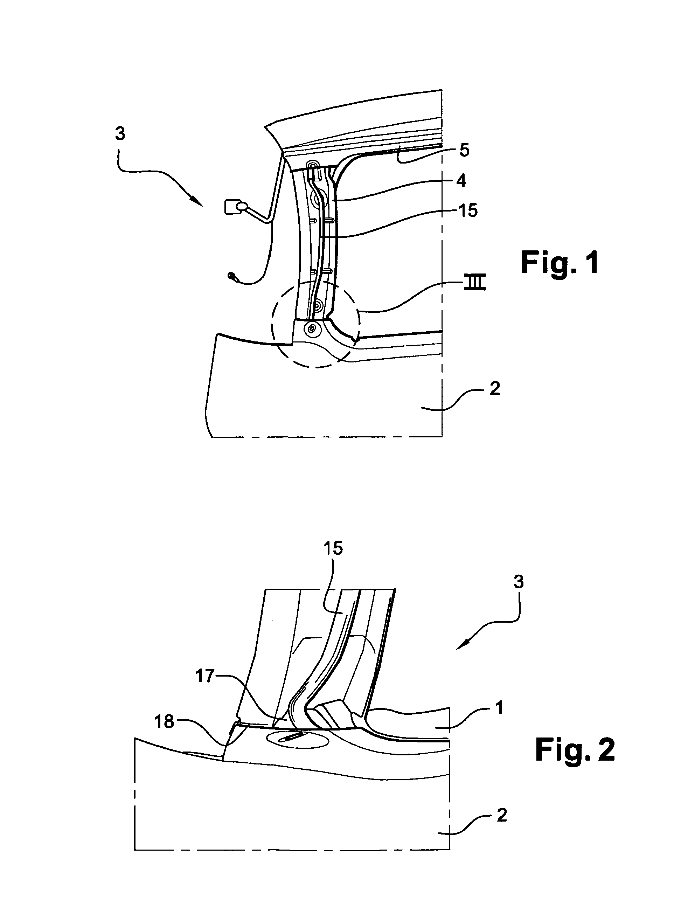

L'invention concerne un panneau de guidage 1 d'un véhicule automobile, formant doublure d'un panneau de carrosserie 2 du hayon du véhicule, et qui est solidaire d'un montant 4 de support du pavillon 5 de ce véhicule. Comme visible sur les figures 1 à 3, le panneau de guidage 1 et le panneau de carrosserie 2 sont assemblés l'un à l'autre en constituant un ensemble de carrosserie 3.

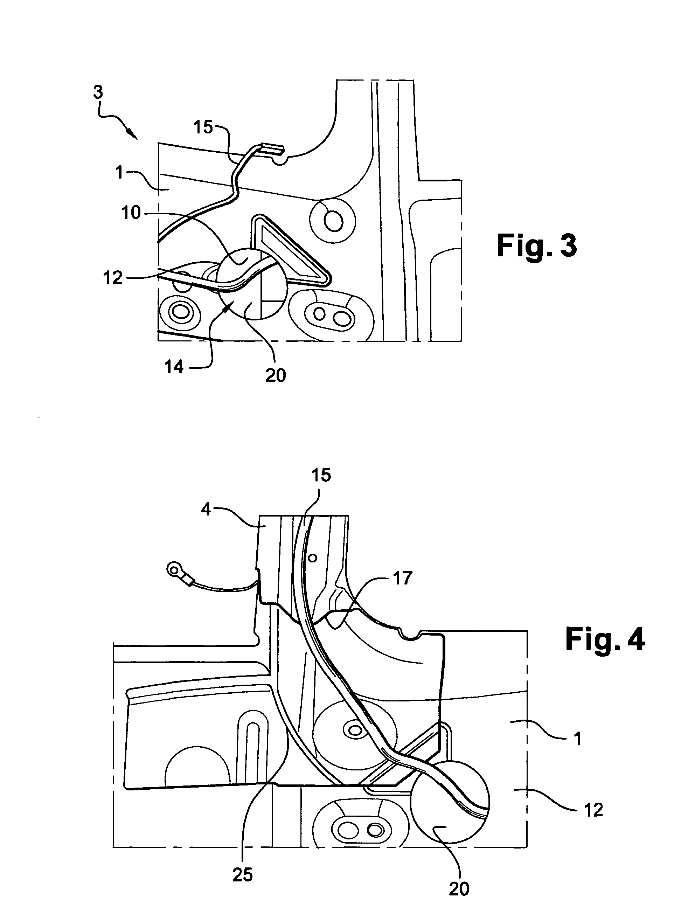

En référence à la figure 3, le panneau de carrosserie 2 est disposé en regard du panneau de guidage 1, de sorte que l'espace délimité entre la paroi interne 10 du panneau de carrosserie 2 et la paroi interne 12 du panneau de guidage 1 constitue un volume opaque 14.

L'ensemble 3 est traversé par un faisceau de câbles électriques 15 depuis une entrée 17 du faisceau de câbles dans l'ensemble 3 (figures 2 et 4) jusqu'à une sortie 20 de ce faisceau de câbles hors de l'ensemble 3 (figures 3 et 4). Ce faisceau de câbles 15, flexible, alimente un appareil électrique du véhicule, tel qu'un lève-vitre ou une serrure, non représenté sur les figures.

En référence à la figure 2, l'entrée 17 du faisceau de câbles 15 est située à la jonction entre le montant 4 et le panneau de carrosserie 2, et est délimité par l'espace entre les panneaux de carrosserie 2 et de guidage 1 au niveau du bord périphérique 18 du panneau 2. La sortie 20 du faisceau de câbles 15 est un orifice circulaire formé dans le panneau de guidage 1, comme plus particulièrement visible aux figures 3 et 4.

Comme illustré à la figure 4, l'entrée 17 et la sortie 20 de l'ensemble 3 sont respectivement positionnées de sorte que le faisceau de câbles 15, en place dans l'ensemble 3, adopte une forme courbée.

Par ailleurs, la paroi interne 12 du panneau de guidage 1 comprend un système de guidage 25 du faisceau de câbles 15 dans l'ensemble 3. Ce système de guidage 25 est solidaire du panneau de guidage 1 et fait saillie du panneau de guidage 1 vers le panneau de carrosserie 2 à l'intérieur du volume opaque 14.

Ce système de guidage 25 est obtenu par une opération d'emboutissage d'une tôle et est ensuite soudé au panneau de guidage 1.

Le système de guidage 25 est arqué d'une courbure orientée vers la sortie 20 de l'ensemble 3. Ainsi, pour faire traverser le faisceau de câbles flexible 15 dans le volume opaque 14 depuis l'entrée 17 jusqu'à la sortie 20 de l'ensemble 3, un opérateur insère l'une des extrémités du faisceau de câbles 15 dans l'entrée 17 puis fait pénétrer le reste du faisceau de câbles 15 dans l'ensemble 3. Le faisceau de câbles 15 glisse alors le long du système de guidage 25 dont la courbure le rapproche de la sortie 20 de l'ensemble 3. Pour récupérer le faisceau 15 de câbles, il suffit ensuite à l'opérateur d'introduire sa main dans l'orifice 20.

Le système de guidage 25 permet donc de guider le faisceau de câbles 15 dans le volume opaque 14 puisque, grâce à sa flexibilité, le faisceau de câbles 15 épouse la forme arquée du système de guidage 25 et, de ce fait, se dirige de lui-même vers la sortie 20 de l'ensemble 3.

## Revendications

1. Panneau de guidage de véhicule automobile, destiné à former avec un panneau de carrosserie (2) un ensemble (3) délimitant un volume opaque (14) et apte à être traversé par un faisceau de câbles (15) depuis une entrée (17) jusqu'à une sortie (20) prévues dans cet ensemble (3), **caractérisé en ce que** ledit panneau de guidage (1) comprend un système de guidage (25) sur au moins une partie de la trajectoire du faisceau de câbles (15) entre l'entrée (17) et la sortie (20) de l'ensemble (3).

2. Panneau de guidage selon la revendication 1, **caractérisé en ce que** l'entrée (17) du faisceau de câbles (15) dans l'ensemble (3) et la sortie (20) du faisceau de câbles (15) depuis l'ensemble (3) sont respectivement positionnées de sorte que lorsque le faisceau de câbles (15) est en place dans l'ensemble (3), il adopte une forme courbée et **en ce que** le système de guidage (25) dudit panneau de guidage (1) est arqué d'une courbure orientée vers la sortie (20) de l'ensemble (3).

3. Panneau de guidage selon l'une quelconque des revendications 1 ou 2, **caractérisé en ce que** le système de guidage (25) est une partie faisant saillie du panneau de guidage (1) et dirigée vers le panneau de carrosserie (2) de l'ensemble (3).

4. Procédé de fabrication d'un panneau de guidage (1) tel que défini par l'une des revendications précédentes, **caractérisé en ce qu'**il comprend au moins les étapes d'emboutissage du système de guidage (25) et de solidarisation par soudure du système de guidage (25) au panneau de guidage (1).

5. Ensemble de carrosserie, **caractérisé en ce qu'**il comprend un panneau de guidage (1) tel que défini dans l'une des revendications 1 à 3, et un panneau de carrosserie (2) espacé du panneau de guidage (1) en délimitant un volume opaque (14), l'ensemble (3) étant apte à être traversé par un faisceau de câbles (15) depuis une entrée (17) du faisceau de câbles (15) dans cet ensemble (3) jusqu'à une sortie (20) du faisceau de câbles (15) de cet ensemble (3).

6. Ensemble selon la revendication précédente, **caractérisé en ce que** l'entrée (17) de l'ensemble (3) est l'espace entre les panneaux de guidage (1) et de carrosserie (2) au niveau du bord périphérique (18) d'au moins l'un de ces panneaux (1, 2) et la sortie (20) de l'ensemble (3) est un orifice formé dans l'un de ces panneaux (1, 2).

7. Ensemble selon l'une des revendications 5 ou 6, **caractérisé en ce que** le panneau de guidage (1) est la doublure du panneau de carrosserie (2) formant ouvrant du véhicule.

8. Véhicule automobile, **caractérisé en ce qu'**il est équipé d'un ensemble de carrosserie tel que défini dans l'une des revendications 5 à 7.

9. Utilisation d'un ensemble de carrosserie tel que défini dans l'une des revendications 6 à 8 pour le guidage d'un faisceau de câbles (15), **caractérisé en ce qu'**il comprend au moins les étapes suivantes :
- on insère le faisceau de câbles (15) dans l'entrée (17) de l'ensemble de carrosserie (3) de véhicule qui glisse le long du système de guidage (25), et
- on récupère le faisceau de câbles (15) par la sortie (20) de l'ensemble (3).

## Claims

1. A guiding panel of an automobile vehicle, intended to form with a body panel (2) an assembly (3) delimiting an opaque volume (14) and suited to be traversed by a bundle of cables (15) from an inlet (17) to an outlet (20) provided in this assembly (3), **characterized in that** the said guiding panel (1) comprises a guiding system (25) on at least a part of the trajectory of the bundle of cables (15) between the inlet (17) and the outlet (20) of the assembly (3).

2. The guiding panel according to Claim 1, **characterized in that** the inlet (17) of the bundle of cables (15) in the assembly (3) and the outlet (20) of the bundle of cables (15) from the assembly (3) are respectively positioned such that when the bundle of cables (15) is in place in the assembly (3), it adopts a curved shape and **in that** the guiding system (25) of the said guiding panel (1) is arched in a curve oriented towards the outlet (20) of the assembly (3).

3. The guiding panel according to any one of Claims 1 or 2, **characterized in that** the guiding system (25) is a part projecting from the guiding panel (1) and directed towards the body panel (2) of the assembly (3).

4. A method for the manufacture of a guiding panel (1) as defined by one of the preceding claims, **characterized in that** it comprises at least the steps of stamping the guiding system (25) and attachment by welding of the guiding system (25) to the guiding panel (1).

5. A body assembly, **characterized in that** it comprises a guiding panel (1) as defined in one of Claims 1 to 3, and a body panel (2) spaced from the guiding panel (1), delimiting an opaque volume (14), the assembly (3) being suited to be traversed by a bundle of cables (15) from an inlet (17) of the bundle of cables (15) in this assembly (3) to an outlet (20) of the bundle of cables (15) from this assembly (3).

6. An assembly according to the preceding claim, **characterized in that** the inlet (17) of the assembly (3) is the space between the guiding panels (1) and of body (2) at the level of the peripheral edge (18) of at least one of these panels (1, 2) and the outlet (20) of the assembly (3) is an orifice formed in one of these panels (1, 2).

7. An assembly according to one of Claims 5 or 6, **characterized in that** the guiding panel (1) is the lining of the body panel (2) forming an opening panel of the vehicle.

8. An automobile vehicle, **characterized in that** it is equipped with a body assembly as defined in one of Claims 5 to 7.

9. Use of a body assembly as defined in one of Claims 6 to 8 for the guiding of a bundle of cables (15), **characterized in that** it comprises at least the following steps:
- the bundle of cables (15) is inserted in the inlet (17) of the body assembly (3) of the vehicle, which slides along the guiding system (25),
and
- the bundle of cables (15) is recovered through the outlet (20) of the assembly (3).

## Patentansprüche

1. Führungstafel für Kraftfahrzeug, die dazu bestimmt ist, mit einer Karosserietafel (2) eine Einheit (3) zu bilden, die ein undurchsichtiges Volumen (14) abgrenzt und von einem Kabelbündel (15) ausgehend von einem Eingang (17) bis zu einem Ausgang (20), die in dieser Einheit vorgesehen sind, durchquert werden kann, **dadurch gekennzeichnet, dass** die Führungstafel (1) ein Führungssystem (25) auf mindestens einem Teil des Verlaufs des Kabelbündels (15) zwischen dem Eingang (17) und dem Ausgang (20) der Einheit (3) aufweist.

2. Führungstafel nach Anspruch 1, **dadurch gekennzeichnet, dass** der Eingang (17) des Kabelbündels (15) in die Einheit (3) und der Ausgang (20) des Kabelbündels (15) aus der Einheit (3) jeweils derart positioniert sind, dass das Kabelbündel (15), wenn es in der Einheit (3) an Ort und Stelle ist, eine gebogene Form annimmt, und dass das Führungssystem (25) der Führungstafel (1) mit einer Biegung gewölbt ist, die zu dem Ausgang (20) der Einheit (3) gewölbt ist.

3. Führungstafel nach einem der Ansprüche 1 oder 2, **dadurch gekennzeichnet, dass** das Führungssystem (25) ein Teil ist, der aus der Führungstafel (1) vorsteht und zu der Karosserietafel (2) der Einheit (3) gerichtet ist.

4. Verfahren zum Herstellen einer Führungstafel (1) wie von einem der vorhergehenden Ansprüche definiert, **dadurch gekennzeichnet, dass** es mindestens die Schritte des Stanzens des Führungssystems (25) und des festen Verbindens durch Schweißen des Führungssystems (25) mit der Führungstafel (1) aufweist.

5. Karosserieeinheit, **dadurch gekennzeichnet, dass** sie eine Führungstafel (1), wie in einem der Ansprüche 1 bis 3 definiert, und eine Karosserietafel (2) aufweist, die von der Führungstafel (1) beabstandet ist, indem sie ein undurchsichtiges Volumen (14) abgrenzt, wobei die Einheit (3) von einem Kabelbündel (15) von dem Eingang (17) des Kabelbündels (15) in diese Einheit (3) bis zu einem Ausgang (20) des Kabelbündels (15) dieser Einheit (3) durchquert werden kann.

6. Einheit nach dem vorhergehenden Anspruch, **dadurch gekennzeichnet, dass** der Eingang (17) der Einheit (3) der Raum zwischen den Führungstafeln (1) und der Karosserie (2) auf dem Niveau des Umfangsrands (18) mindestens einer dieser Tafeln (1, 2) ist, und der Ausgang (20) der Einheit (3) eine Öffnung ist, die in einer dieser Tafeln (1, 2) ausgebildet ist.

7. Einheit nach einem der Ansprüche 5 oder 6, **dadurch gekennzeichnet, dass** die Führungstafel (1) die Verkleidung der Karosserietafel (2) ist, die die Tür des Fahrzeugs bildet.

8. Kraftfahrzeug, **dadurch gekennzeichnet, dass** es mit einer Karosserieeinheit wie die, die in einem der Ansprüche 5 bis 7 definiert ist, ausgestattet ist.

9. Einsatz einer wie in einem der Ansprüche 6 bis 8 definierten Karosserieeinheit zum Führen eines Kabelbündels (15), **dadurch gekennzeichnet, dass** er mindestens die folgenden Schritte aufweist:
- Einfügen des Kabelbündels (15) in den Eingang (17) der Fahrzeugkarosserieeinheit (3), die entlang des Führungssystems (25) gleitet, und
- Wiederaufnehmen des Kabelbündels (15) durch den Ausgang (20) der Einheit (3).
